# EUROPÄISCHE PATENTSCHRIFT

(11) **EP 1 332 163 B1**
(45) Veröffentlichungstag und Bekanntmachung des Hinweises auf die Patenterteilung: **07.06.2006**
(21) Anmeldenummer: 01988738.9
(22) Anmeldetag: 26.10.2001
(51) Int. Cl.: C08F 12/08, C08F 293/00

(54) **VEFAHREN ZUM KETTENABBRUCH BEI DER ANIONISCHEN POLYMERISATION**
METHOD FOR BREAKING A CHAIN DURING ANIONIC POLYMERISATION
PROCEDE DE RUPTURE DE CHAINE LORS DE LA POLYMERISATION ANIONIQUE

(30) Priorität: 27.10.2000 DE 10053324
(43) Veröffentlichungstag der Anmeldung: 06.08.2003
(73) Patentinhaber: BASF Aktiengesellschaft, 67056 Ludwigshafen (DE)
(72) Erfinder: KNOLL, Konrad, 67069 Ludwigshafen (DE); GAUSEPOHL, Hermann, 67112 Mutterstadt (DE); WÜNSCH, Josef, Richard, 67105 Schifferstadt (DE); NAEGELE, Paul, 67166 Otterstadt (DE); KOCH, Jürgen, 67141 Neuhofen (DE)
(86) Internationale Anmeldenummer: PCT/EP2001/012448
(87) Internationale Veröffentlichungsnummer: WO 2002/034792

(56) Entgegenhaltungen:
- FR-A- 2 264 071
- US-A- 3 139 416

## Beschreibung

Die Erfindung betrifft ein Verfahren zur Herstellung von linearen Polymerisaten oder Blockcopolymerisaten des Styrols durch anionische Polymerisation von Styrol und gegebenenfalls Butadien in einem inerten, unpolaren Lösungsmittel in Gegenwart von lithiumorganischen Initiatoren und anschließendem Abbruch der "lebenden" Polymerketten.

Bei der anionischen Polymerisation von Styrol und der Copolymerisation von Styrol und Butadien zu Blockcopolymerisaten muß das "lebende" Kettenende terminiert werden. Als Kettenabbruchmittel werden in der Praxis Alkohole, insbesondere Isopropanol, eingesetzt.

Es hat sich nun gezeigt, daß bei der Herstellung von linearen Polymerisaten bei Terminierung mit Alkoholen in den Wärmetauschern zum Aufheizen der Polymerlösung auf 200°C für die Flashentgasung innerhalb von wenigen Tagen bis Wochen sich ein Wandbelag bildet, der den Wärmeübergang zunehmend verschlechtert. Bei längeren Kampagnen muß daher der Wärmetauscher ausgebaut und gereinigt werden. Auch im Polymerisationskessel selbst wird die Bildung eines weißen Belags beobachtet, bei dem es sich wahrscheinlich um Lithiumisopropanölat und Lithiumhydroxid handelt.

US 3,139,416 beschreibt allgemein ein Verfahren zur Herstellung von Polymeren mit Hydroxylgruppen durch Umsetzung von anionisch polymerisiertem Styrol oder Styrolderivaten mit Aldehyden oder Ketonen der allgemeinen Formel R¹R²C=O.

Der Erfindung lag daher die Aufgabe zugrunde, diese Belagbildung zu unterdrücken. Es wurde gefunden, daß diese Aufgabe gelöst wird, wenn man als Kettenabbruchmittel einen n-Alkylglycidylether einsetzt.

Gegenstand der Erfindung ist demzufolge ein Verfahren zur Herstellung von linearen Polymerisaten oder Blockcopolymerisaten des Styrols durch anionische Polymerisation von Styrol und gegebenenfalls Butadien in einem inerten, unpolaren Lösungsmittel und anschließendem Abbruch des "lebenden" Polymerketten durch einen n-Alkylglycidylether.

Nach Hydrolyse des beim Kettenabbruch entstandenen Lithiumalkoholats wird ein mit Hydroxygruppen terminiertes Polymerisat erhalten. Die Funktionalisierung von lebenden anionischen Polymerisaten, insbesondere von Polybutadien und Polyisopren, mit Hydroxyendgruppen durch Kettenabbruch mit Ethylenoxid ist an sich bekannt, z.B. aus H.L. Hsieh und R.P. Quirk, "Principles of Anionic Polymerization", Marcel Dekker 1996, Seite 267, und S.F.

Reed, Journal of Polymer Science, Part A-1, Col. 10 (1972), Seiten 1187-1194. In diesen Veröffentlichungen findet sich jedoch kein Hinweis darauf, daß durch eine Hydroxyfunktionalisierung die Belagbildung bei der anionischen Polymerisation von Styrol unterdrückt werden kann. Bei Verwendung von Ethylenoxid als Kettenabbruchmittel müßten wegen seiner Cancerogenität aufwendige Sicherheitsvorkehrungen getroffen werden, so daß es in einem technischen Verfahren ohnehin nicht geeignet wäre.

Die anionische Polymerisation von Styrol und die Copolymerisation von Styrol und Butadien zu Blockcopolymeren sind wohlbekannt. Blockcopolymere bestehen aus mehreren Polymerblöcken, z.B. Polystyrol-, Polybutadien- und Butadien/Styrol-Copolymerblöcken. Bei letzterem kann es sich um statistische Copolymere handeln oder z.B. um "getaperte" Copolymerblöcke, bei denen sich erst eine Polybutadiensequenz bildet, in die bei fortschreitender Polymerisation immer mehr Styrol eingebaut wird, so daß schließlich eine Polystyrolsequenz entsteht. In allen Fällen befindet sich am Kettenende ein Lithiumatom, das terminiert werden muß.

Die anionische Polymerisation wird in einem inerten, unpolaren Lösungsmittel, vorzugsweise in Cyclohexan, durchgeführt. Bevorzugte lithiumorganische Initiatoren sind n-Butyllithium und sec.-Butyllithium. Bei der Polymerisation können die üblichen Hilfsmittel zugesetzt werden, wie z.B. Ether, wie Tetrahydrofuran, die als Aktivatoren für n-Butyllithium und - in größeren Mengen eingesetzt - als Randomizer zur Herstellung von statistischen Copolymerisaten wirken, sowie Kaliumalkoholate, wie Kalium-tert.-amylat, die ebenfalls als Randomizer wirken.

Nach Beendigung der Polymerisation erfolgt erfindungsgemäß der Kettenabbruch mittels eines n-Alkylglycidylethers. Bevorzugtes Kettenabbruchmittel ist n-Butylglycidylether. Das Kettenabbruchmittel wird zweckmäßigerweise in stöchiometrischen Mengen, bezogen auf Lithium, oder in geringem Unterschuß eingesetzt, vorzugsweise im Molverhältnis 1:1 bis 1:0,95. Durch Anwendung eines geringen Unterschusses kann vermieden werden, daß Rückstände des Abbruchmittels im Polymerisat enthalten bleiben.

Es hat sich gezeigt, daß bei dem erfindungsgemäßen Kettenabbruch häufig eine starke Erhöhung der Viskosität der Polymerlösung auftritt. Um die Viskosität wieder zu erniedrigen, können in einer bevorzugten Ausführungsform der Erfindung Alkohole, vorzugsweise Isopropanol oder Glycerin, in unterstöchiometrischen Mengen zugesetzt werden. Bevorzugt werden auf 100 Mol Lithium 1 bis 99, insbesondere 5 bis 50 Mol Alkohol zugesetzt.

Im Anschluß an den Kettenabbruch bzw. an die Viskositätserniedrigung wird das entstandene Lithiumalkoholat hydrolysiert. Dies kann mit organischen oder anorganischen Säuren geschehen, vorzugsweise mit CO₂/H₂O. Dabei werden auch restliche Carbanionen, die bei einem Unterschuß an Kettenabbruchmittel vorliegen, terminiert.

Das bei der Hydrolyse entstehende Lithiumsalz sollte in der Polymerisatlösung löslich oder zumindest fein dispergierbar sein, damit das Polymerisat transparent bleibt. Dies ist bei Lithiumcarbonat, das bei Hydrolyse mit CO₂/H₂O entsteht, der Fall.

Nach Kettenabbruch und Hydrolyse wird die Polymerlösung wie üblich stabilisiert, z.B. mit Trisnonylphenylphosphit, 2,6-Di-tert.butyl-4-methylphenol, Irganox 1076 oder Irganox 3052 (CIBA SC), und nach bekannten Entgasungsverfahren vom Lösungsmittel befreit.

### Beispiel 1

In einem inertisierten und mit Stickstoff überlagerten 10 1-Edelstahlrührbehälter wurden 2991 ml über Aluminiumoxid getrocknetes Cyclohexan und 1 ml 1,1-Diphenylethen vorgelegt und die Mischung so lange bei 58°C mit 1,3-molarer sec.-Butyllithium-Lösung in Cyclohexan versetzt, bis bei 1,6 ml eine leichte Rotfärbung auftrat. Danach wurden 15,4 ml s-Butyllithium und 1,48 ml Kalium-tert.-Amylat (5,4 %ig in Cyclohexan) in den Kessel eingespritzt. 1100 ml Styrol wurden bei 50°C unter Kühlung über 10 min. zudosiert. Hierbei stieg die Temperatur auf 97°C an. Die Lösung war tief dunkelrot bis schwärzlich. 2 min nach Erreichen der Maximaltemperatur und Einsetzen des Temperaturrückgangs wurden 2,86 ml (19 mmol = 95 mol-% bzgl. sec-Butyllithium) Butylglycidether zugegeben. Nach 5 min. war die Lösung hellrot. Die Viskosität war deutlich angestiegen. Zur Lösung wurden dann 3,0 g einer 10 %igen Isopropanollösung (25 mol-% bzgl. Butyllithium) in Cyclohexan gegeben, wobei die Viskosität wieder auf den ursprünglichen Wert vor der Zugabe von Butylglycidylether abfiel. Nach Abkühlen auf 40°C wurde die Lösung in einen Kanister abgelassen und mit 10 g Trockeneis (CO₂) und 5 ml Wasser versetzt und geschüttelt. Die Lösung war danach wasserklar und farblos. Sie veränderte sich über mehrere Tage hinweg nicht.

Die GPC-Messung ergab einen monomodalen Peak mit M_{w}/Mₙ = 1,03 und Mₙ = 54 000 g/mol (Theorie 50 000).

Die Lösung wurde im Vakuumtrockenschrank eingedampft und der Rückstand bei 180°C zu 2 mm dicken Pressplatten verarbeitet, an denen die Transparenz bestimmt wurde: Transmission 88,59 %, Yellownessindex: 1,7; Haze: 4,1.

### Vergleichsbeispiel 1

Die Polymerisation wurde wie in Beispiel 1 durchgeführt, jedoch zum Terminieren statt Butylglycidylether 12 g 10 %ige Isopropanollösung zugegeben. Die blassgelbe Lösung wurde dann wie oben mit 10 g Trockeneis (CO₂) und 5 ml Wasser sauergestellt. Sie war zwar farblos, aber milchig trüb. Nach einem Tag Stehen fiel ein voluminöser weißer Niederschlag aus, der als feuchtes Li₂CO₃ identifiziert wurde.

### Beispiel 2 (Vergleich)

Analog Beispiel 1 wurden statt Butylglycidylether 2,01 ml Diethylketon eingesetzt und analog aufgearbeitet. Die Lösung war danach ebenfalls wasserklar und farblos. Sie veränderte sich über mehrere Tage hinweg nicht.

Die GPC-Messung ergab einen monomodalen Peak mit M_{w}/Mₙ = 1,03 und Mₙ = 53 000 g/mol (Theorie 50 000).

Die Lösung wurde im Vakuumtrockenschrank.eingedampft und der Rückstand bei 180°C zu 2 mm dicken Pressplatten verarbeitet, an denen die Transparenz bestimmt wurde: Transmission 89,00 %, Yellownessindex: 1,6; Haze: 2,7.

### Beispiel 3 (Vergleich)

Analog Beispiel 1 wurden statt Butylglycidylether 1,99 ml Cyclohexanon eingesetzt und analog aufgearbeitet. Die Lösung war danach ebenfalls wasserklar und farblos. Sie veränderte sich über mehrere Tage hinweg nicht.

Die GPC-Messung ergab eine bimodale Molmassenverteilung mit Maxima bei 47 000 und 94 000 g/mol. Der hochmolekulare Anteil betrug 21 %.

### Beispiel 4 (Vergleich)

Analog Beispiel 1 wurden statt Butylglycidylether 12 g 10 %ige Acetonlösung eingesetzt und analog aufgearbeitet. Die Lösung war danach ebenfalls wasserklar, aber tief braunrot gefärbt. Sie veränderte sich über mehrere Tage hinweg nicht.

Die GPC-Messung ergab eine bimodale Molmassenverteilung mit Maxima bei 47 000 und 94 000 g/mol. Der hochmolekulare Anteil betrug 25 %.

### Beispiel 5

In einem inertisierten und mit Stickstoff überlagerten 10 1-Edelstahlrührbehälter wurden 4786 ml über Aluminiumoxid getrocknetes Cyclohexan und 1 ml 1,1-Diphenylethen vorgelegt und die Mischung so lange bei 58°C mit 1,4-molarer sec-Butyllithium-Lösung in Cyclohexan versetzt, bis bei 1,6 ml eine leichte Rotfärbung auftrat. Danach wurden 10,4 ml (14,6 mmol) 1,4-molares s-Butyllithium und 1,16 ml (0,39 mmol) Kalium-tert.Amylat (0,338 molar in Cyclohexan) in den Kessel eingespritzt. In einem Temperaturbereich zwischen 40 und 65°C werden sukzessive die folgenden Monomermengen zugegeben und vollständig auspolymerisiert:
a) 211 ml (192 g) Styrol,
b) 146 ml (133 g) Styrol und 335 ml (219 g) Butadien gleichzeitig,
c) 276 ml (251 g) Styrol und 276 ml (181 g) Butadien gleichzeitig,
d) 686 ml (624 g) Styrol.

2 min nach Erreichen der Maximaltemperatur und Einsetzen des Temperaturrückgangs wurden 1,97 ml (14,5 mmol = 95 mol-% bzgl. sec-Butyllithium) Butylglycidylether zugegeben. Nach 5 min war die ursprünglich rot-schwarze Lösung hellrot. Die Viskosität war deutlich angestiegen. Zur Lösung wurden dann 0,07 ml (2,9 mmol) Glycerin gegeben, wobei die Viskosität wieder auf den ursprünglichen Wert vor der Zugabe von Butylglycidylether abfiel. Nach Abkühlen auf 40°C wurde die Lösung in einen Kanister abgelassen und mit 7 g Trockeneis (CO₂) und 3,4 ml Wasser versetzt und geschüttelt. Die Lösung war danach wasserklar und farblos. Nach einem Tag wurde sie schwach trüb. Die GPV-Messung ergab einen monomodalen Peak mit M_{w}/Mₙ = 1,135 und Mₙ = 146 000 g/mol.

### Vergleichsbeispiel 5

Der Versuch wurde wie Beispiel 5 durchgeführt, nur daß statt Butylglycidylether 0,9 g Isopropanol zugegeben wurden. Nach dem Ansäuern mit CO₂/Wasser wurde eine zwar farblose, aber stark trübe Lösung erhalten, aus der im Laufe eines Tages ein dicker, flockiger Niederschlag ausfiel.

## Patentansprüche

1. Verfahren zur Herstellung von linearen Polymerisaten oder Blockcopolymerisaten des Styrols durch anionische Polymerisation von Styrol und gegebenenfalls Butadien in einem inerten, unpolaren Lösungsmittel in Gegenwart von lithiumorganischen Initiatoren und anschließendem Abbruch der "lebenden" Polymerketten, **dadurch gekennzeichnet, daß** der Kettenabbruch durch einen n-Alkylglycidylether vorgenommen wird.

2. Verfahren nach Anspruch 1, **dadurch gekennzeichnet, daß** als Kettenabbruchmittel n-Butylglycidylether eingesetzt wird.

3. Verfahren nach Anspruch 1, **dadurch gekennzeichnet, daß** das Kettenabbruchmittel in stöchiometrischen oder gering unterstöchiometrischen Mengen, bezogen auf Lithium, eingesetzt wird.

4. Verfahren nach Anspruch 1, **dadurch gekennzeichnet, daß** nach dem Kettenabbruch zur Erniedrigung der Viskosität der Lösung Alkohole, vorzugsweise Isopropanol oder Glycerin, in unterstöchiometrischen Mengen, bezogen auf Lithium, zugesetzt werden.

5. Verfahren nach Anspruch 1, **dadurch gekennzeichnet, daß** im Anschluß an den Kettenabbruch nach Anspruch 1 bzw. im Anschluß an die Viskositätserniedrigung nach Anspruch 4 das entstandene Lithiumalkoholat hydrolysiert wird.

6. Verfahren nach Anspruch 5, **dadurch gekennzeichnet, daß** die Hydrolyse mittels wäßriger Säuren, vorzugsweise mittels CO₂/H₂O, durchgeführt wird.

## Claims

1. A process for the preparation of linear polymers or block copolymers of styrene by anionic polymerization of styrene and, if desired, butadiene in an inert apolar solvent in the presence of organolithium initiators and subsequent termination of the "living" polymer chains, which comprises carrying out the chain termination with an n-alkyl glycidyl ether.

2. The process according to claim 1, wherein the chain terminator used is n-butyl glycidyl ether.

3. The process according to claim 1, wherein the chain terminator is used in stoichiometric or slightly substoichiometric amounts, based on lithium.

4. The process according to claim 1, wherein the chain termination is followed by addition of alcohols, preferably isopropanol or glycerol, in substoichiometric amounts, based on lithium, in order to reduce the viscosity of the solution.

5. The process according to claim 1, wherein the chain termination according to claim 1 or the viscosity reduction according to claim 4 is followed by hydrolysis of the resulting lithium alkoxide.

6. The process according to claim 5, wherein the hydrolysis is carried out with aqueous acids, preferably with CO₂/H₂O.

## Revendications

1. Procédé de préparation de polymères linéaires ou copolymères blocs du styrène par polymérisation anionique de styrène et éventuellement de butadiène dans un solvant inerte, non polaire, en présence d'amorceurs organiques à base de lithium, et rupture ultérieure des chaînes de polymères « vivantes », **caractérisé en ce que** la rupture de chaîne est effectuée par un éther n-alkylglycidylique.

2. Procédé suivant la revendication 1, **caractérisé en ce que**, comme agent de rupture de chaîne, on met en oeuvre de l'éther n-butylglycidylique.

3. Procédé suivant la revendication 1, **caractérisé en ce que** l'agent de rupture de chaîne est mis en oeuvre, par rapport au lithium, en des quantités stoechiométriques ou faiblement inférieures à la stoechiométrie.

4. Procédé suivant la revendication 1, **caractérisé en ce que**, après la rupture de chaîne, on ajoute, pour diminuer la viscosité de la solution, des alcools, de préférence de l'isopropanol ou de la glycérine, en des quantités inférieures à la stoechiométrie, par rapport au lithium.

5. Procédé suivant la revendication 1, **caractérisé en ce que**, à la suite de la rupture de chaîne suivant la revendication 1 ou de la diminution de viscosité suivant la revendication 4, on hydrolyse l'alcoolate de lithium obtenu.

6. Procédé suivant la revendication 5, **caractérisé en ce que** l'hydrolyse est effectuée au moyen d'acides aqueux, de préférence au moyen de CO₂/H₂O.
